# EUROPEAN PATENT APPLICATION

(11) **EP 1 254 801 A2**
(43) Date of publication of application: **06.11.2002**
(21) Application number: 01500218.1
(22) Date of filing: 17.08.2001
(51) Int. Cl.: B60J 7/10

(54) **A fastening and tightening device for a side insulating canvas in conveying vehicles.**

(30) Priority: 03.05.2001 ES 200101113
(71) Applicant: Miro Bravo, Vicente, 03800 Alcoy (Alicante) (ES)
(72) Inventor: Miro Bravo, Vicente, 03800 Alcoy (Alicante) (ES)
(74) Representative: Isern Jara, Nuria

(57) **Abstract**

A fastening and tightening device for a side curtain or canvas in a transport vehicle or towing car, formed by an axletree (2) on the lower side of the platform (1) of the transport vehicle that runs along the entire length of this area, next to the side where the curtain or canvas (7) is located. The rotation of the axletree (2) is activated by an endless screw (6), preferably located in the middle of the axle. The latter is equipped with a longitudinal lug (3) or plate that extends tangentially from it and faces the direction opposite that of the canvas (7). A series of hooks (9) on the lower part of the canvas can be attached to the lug (3). The hooks are connected to the canvas by short, flexible straps (10) and the lower edge of the canvas is protected by a longitudinal strengthening band.

## Description

### Field of the invention

This invention refers to a fastening and tightening device for a side insulating canvas in conveying vehicles. It includes significant changes and advantages in comparison to current methods of tightening side canvases or curtains that cover transport lorry bodies.

More specifically, the novel invention has designed a device that facilitates tightening of an insulating vertical curtain or canvas by simply fastening some flat hooks on the canvas to an axletree located lengthways on the lower part of the vehicle. This device is characterised by the fact that there is a tangential plate or lug along the contour of the aforementioned axletree. The plate or lug is appropriate for fastening the hooks and tightening the canvas due to the eccentric effect that occurs when the axletree, which is driven by an endless screw, turns at an angle.

### Background of the invention

There are several possible methods used for closing and/or thermally insulating the walls of the loading area in conveying vehicles that are presently available on the market. In fact, the outer walls of the bodies or loading boxes of many loading vehicles are formed by curtains or canvases that insulate the inner space and the load from the external environment. The curtains are made of flexible, laminar material that is kept on the upper side of the truck body, and the lower edge is open in order to facilitate access to the inner space. The lower edge of the curtain is tightened and secured to the lower part of the truck chassis by ropes and/or straps to prevent the thermal exchange between the inside and the outside of the body, and to ensure there is no change in the conditions inside the body. There are hooks on the ends of the ropes that secure these curtains with tightening winches or other means of fastening.

Spanish Utility Model No. 191,778 describes an example of such a device. However, the drawback of this kind of device is that the tightening is designed specifically for each of the straps or similar units. Therefore, individual closing mechanisms are also used for each of the aforementioned straps. This means that it takes a long time to tighten the curtain and it is difficult to obtain uniform, even tightening.

Spanish Utility Model No. 95.02256 by this applicant is also known. In this model, there are several straps or tapes with buckles on the lower edge of the canvas, which are adapted to the axletree located under the truck chassis. The axletree turns and is driven by an endless screw mechanism, so that all straps are wound around the axletree and tightened evenly.

This device is easy to operate and ensures uniform tightening, but the operator must enter the area below the loading platform or truck chassis in order to fasten the straps on the appropriate supports located along the axletree. The operator must crouch down to perform this task, and the handling of the strap buckles is uncomfortable and difficult. Moreover, the area where the fastening and tightening the straps is performed is usually full of dust, mud, and/or other unpleasant matters.

Another additional problem is that, since the curtains are replaced due to tearing, natural ageing or for other reasons, a new curtain must be made with the same number of straps, and the distance between the straps must be equal to the separation between the fastening devices along the tightening axletree.

### Description of the invention

The device used to tighten and fasten an insulating curtain for transport vehicles described in this application is characterised by the fact that it includes a mechanism located under the vehicle loading platform, along the side where the curtain is installed, that runs along the entire length of the platform.

Such a device is formed by an axletree with a small projecting plate or lug, located in a tangential position and facing the direction opposite that of the curtain. There are also several flat hooks on the lower part of the curtain or canvas that have been designed for quick fastening to these small plates or lugs and are attached to the lower edge of the curtain by some short, flexible straps. There is also a strengthening band along the lower edge of the curtain that covers the base of each of the straps.

The axletree is parallel to the side of the vehicle and is located in an area quite near the lower part of the chassis. It is supported by two end brackets and a central bracket. This central bracket also houses a lubricated endless screw that is located in a watertight box and equipped with a driving head on the front that has been designed so that either a handle or a crank on an electrical motor can be attached. Due to the rotation of the endless screw, both half axletrees turn and move the aforementioned plate at an angle.

The hooks on the curtain are designed so that they can be easily fastened to the plate located tangential to the axletree when the canvas is near the lower part of the platform. After the hooks have been fastened, as the endless screw rotates, the axletree turns at a certain angle, moving the plate away from the lower part of the platform and pulling on the hooks. As a result of the turning of the plate and pulling on the hooks, the straps are tightened on the axle, due to an eccentric wheel effect, so that the curtain becomes taut.

The aforementioned operation can be carried out easily from the side of the lorry. There is no need to enter the area under the platform, as the axle and hooks are near the outside.

The rotation of the axletree is less than a full turn. Therefore, this prevents the straps from winding around the axle in full turns. With rotation of approximately one-quarter to one-half a turn, the curtain is pulled taut. The endless screw that drives the axletrees is self-braking and, therefore, it prevents involuntary loosening of the canvas.

To complement the following description of the invention and provide a more thorough understanding of its characteristics, a set of drawings has been included. These drawings illustrate some of the most important aspects of the invention.

### Brief description of the drawings

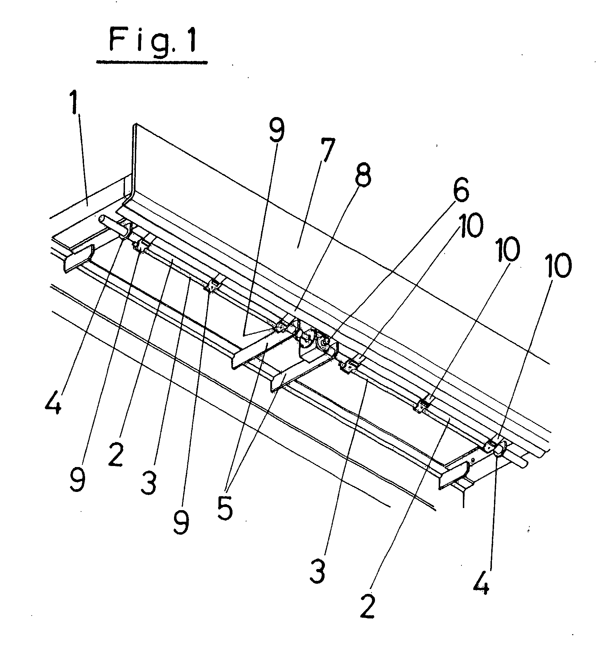

Figure 1 is a lower view of a tightening device.

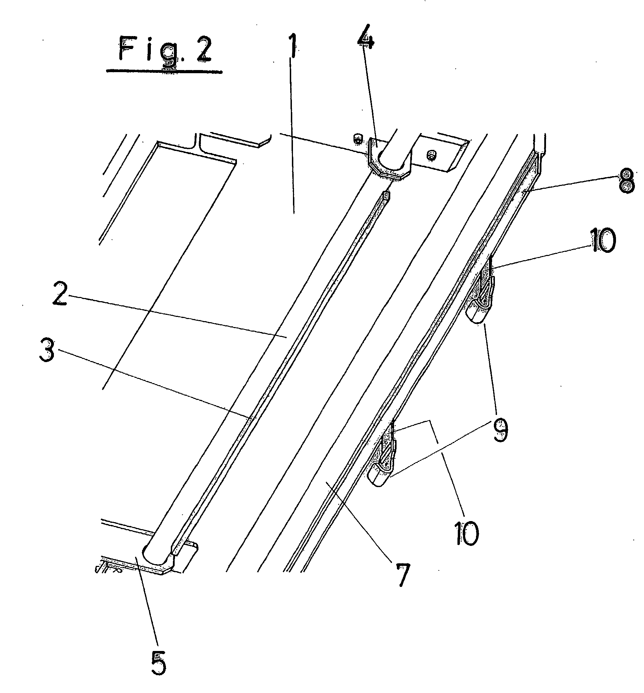

Figure 2 is a lower view of the same device. In this case, the hooks have not yet been attached to the axle.

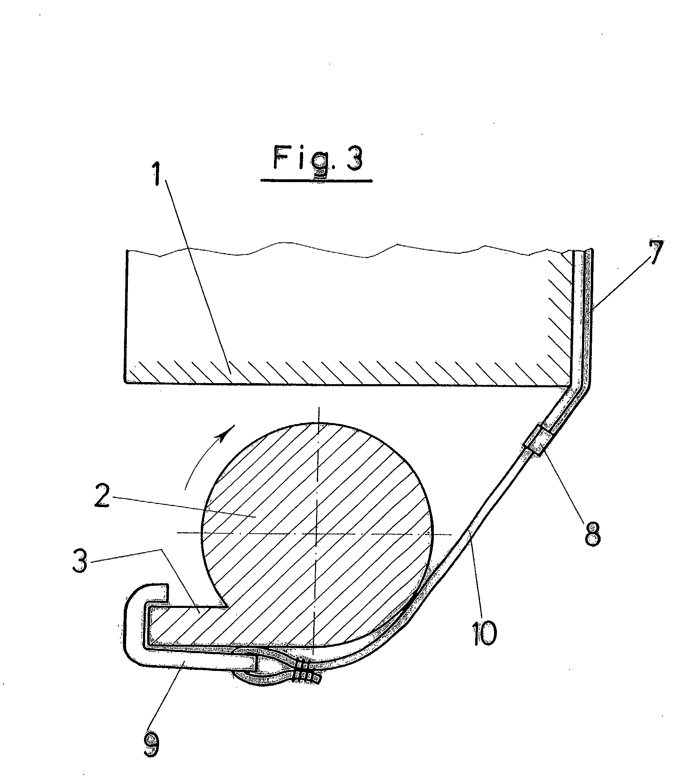

Figure 3 is a detailed view of a cross section of the device, with a hook fastened to the axletree.

### Description of a preferred embodiment

The aforementioned figures show a preferred embodiment of the invention, and the references below refer to the numbering used in these figures. The invention consists of an axletree (2) located on the lower side of the loading platform (1) of a transport vehicle, next to the side on which a curtain (7) is located. This curtain is closed from the outside and is near the edge of the platform (1). The axletree (2) runs along the entire length of the lower part of the platform (1), and is fastened by two end brackets (4) and a central bracket (5). The latter also serves as a housing for an endless screw (6), which has a head that can be attached to a handle or a crank on an electric motor.

Along the length of the axle (2) there is a lug (3) or plate that extends out from the axle and faces the direction opposite that of the upper curtain (2). On the lower edge of this curtain there is a longitudinal reinforcement (8) where several flat hooks (9) are connected by a short strap (10). These hooks can be inserted in the lug or plate (3) of the axle (2).

## Claims

1. A device for fastening and pulling taut a side curtain or canvas in a transport vehicle, of the kind formed by a longitudinal axletree located on the lower part of the loading platform of a vehicle or towing lorry, in the side where the curtain or canvas is open on its lower part, said axle being equipped with a driving mechanism that includes an endless screw and supporting brackets, ***characterized in that*** the axletree (2) has in its contour a longitudinal lug or plate (3) that runs lengthways, tangentially and facing in the direction opposite to that of the upper curtain, and **in that** the curtain or canvas (7) has in its lower part a number of flat hooks (9) designed so that they can be fastened to the lug (3) quickly for tightening the curtain or canvas (7).

2. The device of claim 1, **characterized in that** the axletree (2) is divided into two half axletrees of similar length that are supported by two end brackets (4) located on the projecting part of the lower area of the platform (1) and by a central bracket (5) in this same area (1), the lug (3) being divided between the half axletrees and aligned parallel to both sides of the central bracket (5), and **in that** said central bracket (5) also defines a protective box that houses an oil-immersed endless screw (6) that activates the tightening rotation of the axle (2), said endless screw showing an emerging driving head so that it can be operated by a handle or a crank on an electric motor.

3. The device of claim 1, **characterized in that** the axle (2) is located under the platform (1), parallel to and substantially near the side part of the platform and operatively adapted to facilitate quick fastening of the hooks (9) of the canvas with no need for the operator to enter the area under the platform (1).

4. The device of claims 1 and 3, **characterized in that** the hooks (9) existing on the lower edge of the curtain (7) are preferably formed by a flat, J-shaped sheet that is joined to the lower edge of the curtain or canvas (7) by a short strap (10), existing a longitudinal reinforcement (8) on the lower edge of the canvas (1).
